**Europäisches Patentamt**

**European Patent Office**

**Office européen des brevets**

(19)

(11) Numéro de publication: **0 231 771**
**B1**

(12) **FASCICULE DE BREVET EUROPEEN**

(45) Date de publication du fascicule du brevet:
04.04.90

(51) Int. Cl.⁴: **H01M 6/32,** H01M 2/40

(21) Numéro de dépôt: 87100340.6

(22) Date de dépôt: **13.01.87**

(54) Structure d'empilement d'electrodes dans une pile amorcable.

(30) Priorité: **16.01.86  FR 8600564**

(43) Date de publication de la demande:
**12.08.87 Bulletin 87/33**

(45) Mention de la délivrance du brevet:
**04.04.90 Bulletin 90/14**

(84) Etats contractants désignés:
**DE FR GB IT SE**

(56) Documents cités:
**EP-A- 0 101 240**
**FR-A- 1 537 180**
**US-A- 4 421 831**

**PATENT ABSTRACTS OF JAPAN,**
**vol. 5, no. 181 (E-83)[853], 20 novembre 1981; &**
**JP-A-56 109 463 (YUASA DENCHI K.K.) 29-08-1981**

(73) Titulaire: **Société Anonyme dite SAFT, 156, avenue de Metz, F-93230 Romainville(FR)**

(72) Inventeur: **Pianchat, Jean-Pierre, 8, rue Jean-Jaurès, F-93130 Noisy Le Sec(FR)**

(74) Mandataire: **Weinmiller, Jürgen et al, Lennéstrasse 9 Postfach 24, D-8133 Feldafing(DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une structure d'empilement d'électrodes dans une pile amorçable à circulation d'électrolyste.

Il peut s'agir par exemple de piles amorçables à l'eau de mer, de certaines piles au lithium et de piles mettant en oeuvre des couples oxyde d'argent-aluminium. Dans ces dernières, l'électrolyte en circulation est une solution aqueuse concentrée d'hydroxyde alcalin dont la température en cours de fonctionnement peut atteindre 90°C et plus. Or, la stabilité de l'électrode d'oxyde d'argent décroît vers 100°C et il y a formation néfaste d'oxygène.

Le problème qui se pose est d'assurer à l'intérieur de chaque couple une distribution d'électrolyte qui permette d'évacuer les centaines de watts thermiques qui s'y créent, de réaliser en même temps l'étanchéité entre deux couples successifs, et de limiter les courants de fuite.

On connaît par le brevet européen n° 0101240, un empilement d'électrodes bipolaires entourées de cadres solidarisés entre eux qui assurent l'écartement entre les électrodes et qui sont munis de moyens de distribution d'électrolyte entre les électrodes.

Une telle disposition n'est pas applicable aux piles amorçables AgO/Al, où les électrodes très minces ne sont pas bipolaires comme dans le brevet précédent, et où l'écartement entre les électrodes sous pression est assuré par des picots collés.

La présente invention a pour but de réaliser une structure d'empilement adaptée aux piles amorçables AgO/Al et résolvant le problème énoncé plus haut.

La présente invention a pour objet une structure d'empilement d'électrodes dans une pile amorçable AgO/Al, comportant un empilage de Volta, chaque élément de l'empilage de forme sensiblement rectangulaire comportant une cathode, une anode et des picots espaceurs solidarisés à l'une des électrodes, structure comportant des puits d'injection d'électrolyte et des puits collecteurs d'électrolyte, ainsi qu'une pompe assurant la circulation de l'électrolyte à partir des puits d'injection jusqu'aux puits collecteurs, caractérisée par le fait que, sur deux côtés opposés de chaque élément, est fixée une plaquette distributrice d'électrolyte, munie d'au moins un orifice transversal pour l'arrivée ou la sortie de l'électrolyte, communiquant avec une pluralité de canaux munis de chicanes de manière à assurer un débit d'électrolyte sensiblement constant en tout point de la surface dudit élément, et par le fait que le bord de chaque plaquette comporte d'une part un épaulement où est collé le bord d'une électrode d'aluminium, et d'autre part plusieurs épaulements successifs permettant son emboîtement avec un jeu dans les plaquettes identiques des éléments adjacents.

Pour éviter les points chauds dans la pile, on limite le débit d'électrolyte dans chaque couple, contrairement à ce qui était fait dans les piles antérieures, et on réalise un équilibrage des débits. Lesdites plaquettes distributrices sont de préférence identiques sur les deux côtés de l'élément concerné. Elles sont réalisées par moulage en matière plastique polymère à haute résistance thermique. A titre d'exemple, on utilise du polybutylène téréphtalate.

L'épaisseur d'une plaquette dans une pile AgO/Al est de l'ordre de 1,2 mm et correspond au pas de l'élément. Les canaux ont une profondeur de l'ordre de deux à trois dizièmes de millimètre.

Toutes les sorties des canaux aboutissent sur une même ligne parallèle au bord des électrodes.

L'orifice d'entrée d'électrolyte comporte avantageusement un limiteur de débit constitué par un bossage venu de moulage avec la plaque distributrice.

D'autres caractéristiques et avantages de la présente invention apparaîtront au cours de la description suivante d'un mode de réalisation donné à titre illustratif mais nullement limitatif et dans lequel :

- la figure 1 est une vue schématique de dessus d'une électrode d'un élément de pile selon l'invention associée à ses deux plaquettes distributrices
- la figure 2 est une vue très schématique en coupe d'un élément selon la ligne II-II de la figure 1
- les figures 3 et 4 sont respectivement des vues en élévation rectoverso d'une plaquette de la figure 1.

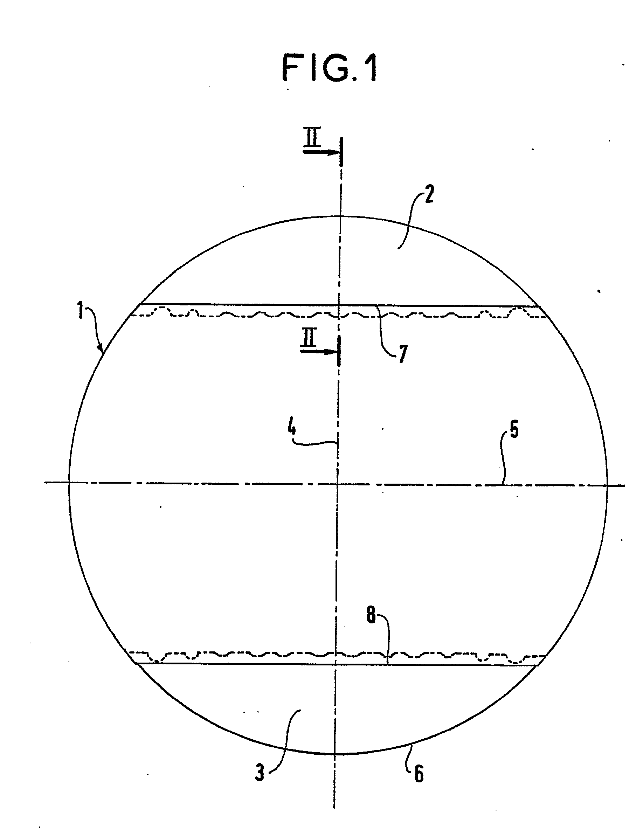

La figure 1 montre schématiquement en vue de dessus le contour d'un élément de pile 1 AgO/Al muni de ses deux plaquettes distributrices d'électrolyte 2 et 3. On a référencé deux axes 4 et 5 définissant un point d'intersection qui est le centre d'un cercle 6, contenant l'ensemble 1-2-3. Les électrodes proprement dites sont symétriques par rapport à ces deux axes ; elles ont des bords droits 7 et 8 parallèles à l'axe 5.

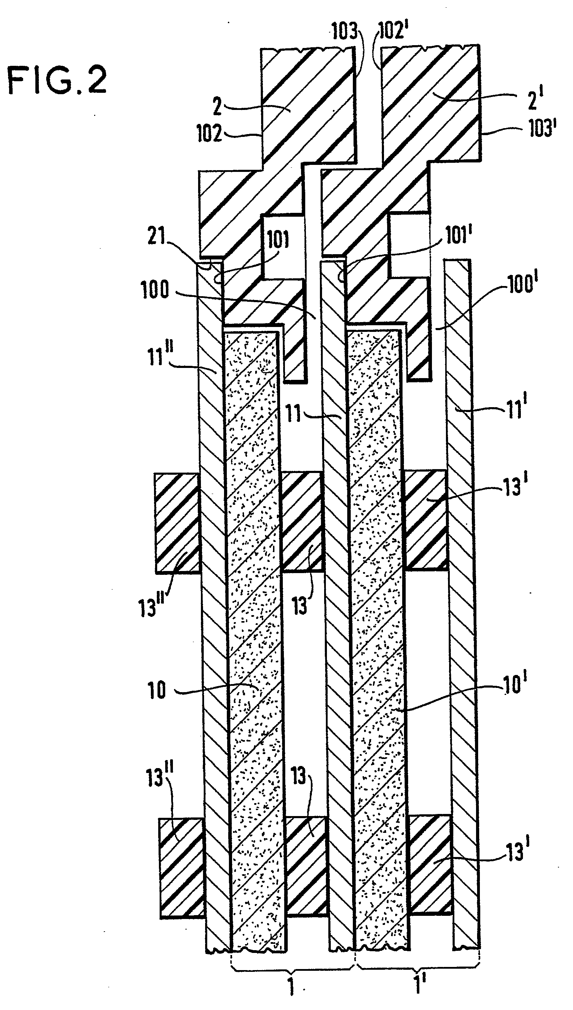

Dans la figure 2 (coupe II-II de la figure 1) on retrouve l'élément 1 de la figure 1 et l'élément 1′ de l'empilement qui lui est adjacent.

L'élément 1 comporte :
- une électrode positive 10 en oxyde d'argent dont l'épaisseur est de l'ordre de 0,57 mm,
- une électrode négative en aluminum 11 dont l'épaisseur est de l'ordre de 0,27 mm, et qui est fixée par collage sur un épaulement 101 de la plaquette distributrice 2,
- des picots espaceurs 13 dont l'épaisseur est de l'ordre de 0,45 mm et qui sont collés sur l'électrode 11.

L'élément 1′ comporte de la même manière une électrode positive 10′, une électrode négative 11′, et des picots espaceurs 13′. On a également représenté l'électrode négative 11″ de l'élément symétrique de l'élément 1′ par rapport à l'élément 1.

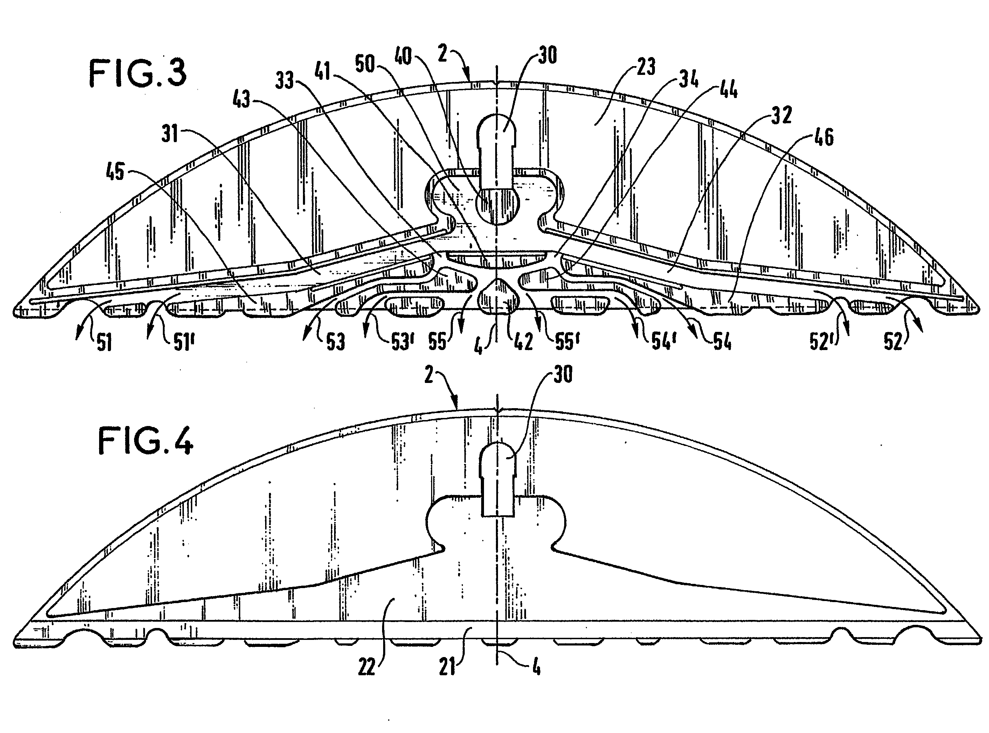

La plaquette distributrice 2 de l'élément 1 comporte une rainure 21 dans laquelle est fixée l'électrode 11″ ; de même la plaquette distributrice 2′ de l'élément 1′ est fixée sur l'électrode 11 de l'élément 1. Comme on va le voir plus en détail à l'aide des figures 3 et 4, les plaquettes 2 et 2′ définissent des canaux 100 et 100′ de répartition d'électrolyte entre les électrodes. De chaque côté de l'empilement les plaquettes superposées 2 et 2′ présentent des épaulements 102, 103, 102′, 103′ permettant un emboîtement des plaquettes les unes dans les autres avec un certain jeu.

Lorsque l'empilement a été réalisé, un serrage important est appliqué sur la surface des électrodes au niveau des picots espaceurs 13, 13' de manière à ce qu'aucune infiltration d'électrolyte ne puisse avoir lieu entre deux électrodes 10 et 11 appliquées l'une contre l'autre ; il est indispensable que subsiste un jeu périphérique au niveau des emboîtements des plaquettes distributrices. L'ensemble est alors soumis à un surmoulage ultérieur sous pression qui assure son étanchéité globale.

Au niveau de chaque couple l'étanchéité est obtenue en outre grâce au collage des bords des électrodes d'aluminium sur les plaquettes distributrices, et les courants de fuite sont très limités grâce aux emboîtements de ces plaquettes distributrice.

Les figures 3 et 4 sont des vues recto-verso d'une plaquette distributrice 2. La face 22 de la figure 4 comporte la rainure 21 sur laquelle est collé le bord de l'électrode 11" (figure 2). La répartition d'électrolyte proprement dite se fait essentiellement grâce à la configuration de la face 23 opposée, visible sur la figure 3.

L'entrée de l'électrolyte s'effectue au niveau de l'orifice 30 ; on a référencé 31 à 34 différents canaux, 40 à 46 des bossages définissant ces canaux ou formant chicanes, 51 à 55 et 51' à 55' les différentes sorties d'électrolyte. L'entrée 30 n'est pas située sur l'axe 4, mais l'ensemble devient symétrique par rapport à l'axe 4 à partir de l'entrée d'électrolyte 50.

Le bossage 40 a pour fonction de limiter le débit d'électrolyte à l'entrée de l'élément ; il crée une perte de charge prépondérante par rapport à toutes les autres, ce qui calibre le débit au niveau de chaque élément et permet de limiter les pertes de charge au sein de cet élément.

Les canaux 31 à 34 présentent la même profondeur qui peut être de l'ordre de deux à trois diziemes de millimètre.

Pour que la vitesse d'écoulement soit sensiblement la même en tout point de l'axe 5 de la figure 1, on réduit la vitesse de l'écoulement central par rapport à la vitesse de l'écoulement latéral. Ceci est réalisé grâce à la présence dans les canaux 33 et 34 de chicanes 43 et 44 et de pavés centraux 41 et 42 dont la largeur est calibrée. Les largeurs des sorties d'électrolyte 51 à 55 et 51' à 55' sont également choisies pour contribuer à l'obtention du résultat.

La forme courbe des canaux latéraux 31 et 32 est telle que les bords latéraux arrondis des électrodes soient irrigués de la même manière que les autres zones.

La configuration qui vient d'être décrite permet à la fois d'assurer une répartition homogène de l'électrolyte dans l'élément, et d'obtenir des valeurs acceptables pour les courants de fuite et les pertes de charge.

L'électrolyte mis en oeuvre est une solution de soude ou de potasse de concentration comprise entre 6N et 10N.

A titre d'exemple le débit de circulation de l'électrolyte dans un couple est de l'ordre de 26 à 40 litres à l'heure.

Bien entendu l'invention n'est pas limitée au mode de réalisation qui vient d'être décrit. On pourra, sans sortir du cadre de l'invention, remplacer la configuration des canaux et des bossages par toute configuration équivalente.

## Revendications

1/ Structure d'empilement d'électrodes pour pile amorçables AgO/Al comportant un empilage de Volta, chaque élément de l'empilage de forme sensiblement rectangulaire comportant une électrode positive (10), une électrode négative (11) et des picots espaceurs (13) solidarisés à l'une des électrodes (11), structure comportant des puits d'injection d'électrolyte et des puits collecteurs d'électrolyte ainsi qu'une pompe assurant la circulation de l'électrolyte à partir des puits d'injection jusqu'aux puits collecteurs, caractérisée par le fait que, sur deux côtés opposés de chaque élément (1), est fixée une plaquette distributrice d'électrolyte (2, 3), munie d'au moins un orifice transversal pour l'entrée (30) ou la sortie de l'électrolyte communiquant avec une pluralité de canaux (31 à 34) munis de chicanes de manière à assurer un débit d'électrolyte sensiblement constant en tout point de la surface de l'élément, et par le fait que le bord de chaque plaquette (2) comporte d'une part un épaulement (101) où est collé le bord d'une électrode d'aluminium (11") et d'autre part plusieurs épaulements successifs (102, 103) permettant son emboîtement avec un jeu dans les plaquettes identiques (2') des éléments adjacents (1').

2/ Structure selon la revendication 1, caractérisée par le fait que lesdites plaquettes distributrices (2, 3) sont en une matière plastique polymère à haute résistance thermique.

3/ Structure selon la revendication 1, caractérisée par le fait que ledit orifice transversal d'entrée d'électrolyte comporte un limiteur de débit.

4/ Structure selon la revendication 3, caractérisée par le fait que ledit limiteur de débit est constitué par un bossage (40) venu de moulage avec ladite plaquette distributrice.

5/ Structure selon l'une des revendications précédentes, caractérisée par le fait que les sorties desdits canaux aboutissent sensiblement sur une même ligne parallèle au bord de l'électrode.

6/ Structure selon la revendication 1, caractérisée par le fait que l'épaisseur de chaque élément est de l'ordre de 1,3 mm.

7/ Structure selon la revendication 6, caractérisée par le fait que la profondeur desdits canaux est de l'ordre de deux à trois diziemes de millimètre.

8/ Structure selon la revendication 1, caractérisée par le fait que le débit d'électrolyte dans un couple est compris entre 26 et 40 litres/heure.

9/ Structure selon l'une des revendications précédentes, caractérisée par le fait qu'elle est munie d'un revêtement isolement étanche surmoulé sous pression.

## Patentansprüche

1. Elektrodenstapel für eine aktivierbare AgO/Al-Zelle mit Voltasäule, wobei jedes Stapelement von im wesentlichen rechteckiger Form eine positive Elektrode (10), eine negative Elektrode (11) und Distanzspitzen (13) aufweist, die mit einer der Elektroden (11) fest verbunden sind, und wobei der Stapel Elektrolyteinspritzschächte und Elektrolytsammelschächte sowie eine Pumpe zur Umwälzung des Elektrolyten von den Einspritzschächten zu den Sammelschächten aufweist, dadurch gekennzeichnet, daß an zwei einander gegenüberliegenden Seiten jeder Zelle (1) eine Elektrolytverteilerplatte (2, 3) befestigt ist, die mit mindestens einer Queröffnung für den Einlaß (30) oder den Auslaß des Elektrolyten ausgestattet ist, der mit einer Vielzahl von Kanälen (31 bis 34) mit Schikaneneinbauten in Verbindung steht, derart, daß an allen Oberflächenpunkten der Zelle eine im wesentlichen konstante Elektrolytversorgung erfolgt und dadurch daß der Rand jeder Platte (2) zum einen eine Schulter (101), an welcher der Rand einer Aluminiumelektrode (11″) angeklebt ist, und zum anderen mehrere aufeinanderfolgende Schultern (102, 103) aufweist, welche das Ineinanderschachteln mit identischen Platten (2′) benachbarter Zellen (1′) unter Belassung eines Abstands ermöglicht.

2. Stapel nach Anspruch 1, dadurch gekennzeichnet, daß die Verteilerplatten (2, 3) aus einem Polymerkunststoff hoher Wärmefestigkeit bestehen.

3. Stapel nach Anspruch 1, dadurch gekennzeichnet, daß das Elektrolyteinlaßquerloch einen Durchflußmengenbegrenzer aufweist.

4. Stapel nach Anspruch 3, dadurch gekennzeichnet, daß der Durchflußmengenbegrenzer aus einem Buckel (40) besteht, der beim Gießen der Verteilerplatte gebildet wird.

5. Stapel nach einem der vorhergehenden Ansprüche, dadurch gekennzeichnet, daß die Auslässe der Kanäle im wesentlichen auf einer gemeinsamen Linie parallel zum Elektrodenrand enden.

6. Stapel nach Anspruch 1, dadurch gekennzeichnet, daß die Dicke jeder Zelle etwa 1,3 mm beträgt.

7. Stapel nach Anspruch 6, dadurch gekennzeichnet, daß die Tiefe der Kanäle etwa zwei bis drei Zehntel Millimeter beträgt.

8. Stapel nach Anspruch 1, dadurch gekennzeichnet, daß die Durchflußmenge in einem Plattenpaar zwischen 26 und 40 l/h liegt.

9. Stapel nach einem der vorhergehenden Ansprüche, dadurch gekennzeichnet, daß er mit einem unter Druck aufgegossenen dichten Isolierüberzug ausgestattet ist.

## Claims

1. An electrode stacking structure in an activatable AgO/Al battery including a Volta pile, each cell in the stack being substantially rectangular in shape and comprising a positive electrode (10), a negative electrode (11), and spacer tabs (13) fixed to one of said electrodes (11), the structure comprising electrolyte injection pits and electrolyte collector pits together with a pump for circulating the electrolyte so that it is conveyed from the injection pits into the injector pits, characterized in that an electrolyte distributor plate (2, 3) is fixed on each of two opposite sides of each cell (1), said plate having at least one transverse orifice for electrolyte entry (30) or exit in communication with a plurality of channels (31 to 34) provided with baffles so as to ensure a substantially constant electrolyte flowrate over any point of the area of a cell, and in that the edge of each plate (2) includes both a shoulder (101) to which the edge of the aluminum electrode (11″) is glued, and a plurality of successive shoulders (102, 103) enabling it to be interfitted with a clearance in identical plates (2′) of adjacent cells (1′).

2. A structure according to claim 1, characterized in that the distributor plates (2, 3) are made of a plastic material based on a polymer capable of withstanding high temperatures.

3. A structure according to claim 1, characterized in that said transverse electrolyte inlet orifice includes a flow rate limiter.

4. A structure according to claim 3, characterized in that said flowrate limiter is constituted by a bump (40) integrally molded with said distributor plate.

5. A structure according to claim 1, characterized in that the outlets from said channels open out in substantially the same line which is parallel to the edge of the electrode.

6. A structure according to claim 1, characterized in that each cell is about 1,3 mm thick.

7. A structure according to claim 6, characterized in that the depth of said channels lies in the range two to three tenths of a millimeter.

8. A structure according to claim 1, characterized in that the electrolyte flowrate through a cell lies in the range 26 to 40 liters per hour.

9. A structure according to any one of the preceding claims, characterized in that it is provided with an insulating coating molded thereover under pressure.

# FIG.1

FIG.2

FIG.3

45 31 43 33 41 50 40 2 30 23 34 44 32 46

51 51' 53 53' 55 4 42 55' 54' 54 52' 52

FIG.4

2 30

22 21 4

EP 0 231 771 B1